# EUROPEAN PATENT SPECIFICATION

(11) **EP 2 173 930 B1**
(45) Date of publication and mention of the grant of the patent: **02.03.2011**
(21) Application number: 08784160.7
(22) Date of filing: 16.07.2008
(51) Int. Cl.: D01D 5/00

(54) **METHOD FOR SPINNING THE LIQUID MATRIX, DEVICE FOR PRODUCTION OF NANOFIBRES THROUGH ELECTROSTATIC SPINNING OF LIQUID MATRIX AND SPINNING ELECTRODE FOR SUCH DEVICE**
VERFAHREN ZUM ERSPINNEN VON FLÜSSIGMATRIX, VORRICHTUNG ZUR HERSTELLUNG VON NANOFASERN DURCH ELEKTROSTATISCHES ERSPINNEN VON FLÜSSIGMATRIX SOWIE SPINNELEKTRODE FÜR EINE DERARTIGE VORRICHTUNG
PROCÉDÉ SERVANT À FILER UNE MATRICE LIQUIDE, DISPOSITIF POUR LA PRODUCTION DE NANOFIBRES PAR FILAGE ÉLECTROSTATIQUE DE MATRICE LIQUIDE ET ÉLECTRODE DE FILAGE POUR UN TEL DISPOSITIF

(30) Priority: 17.07.2007 CZ 20070485
(43) Date of publication of application: 14.04.2010
(73) Proprietor: Elmarco, S.R.O., 460 07 Liberec (CZ)
(72) Inventor: PETRAS, David, 763 02 Zin (CZ); MALY, Miroslav, 464 01 Visnova (CZ); KOVAC, Martin, 226 23 Cenkov (CZ); STROMSKY, Vit, 463 12 Liberec (CZ); POZNER, Jan, 460 07 Liberec (CZ); TRDLICKA, Jan, 379 01 Trebon (CZ); MARES, Ladislav, 460 10 Liberec (CZ); CMELIK, Jan, 460 01 Liberec (CZ); JAKUBEK, Frantisek, 460 15 Liberec (CZ)
(74) Representative: Musil, Dobroslav
(86) International application number: PCT/CZ2008/000082
(87) International publication number: WO 2009/010020

(56) References cited:
- DE-A1- 10 136 255
- US-A- 4 287 139

## Description

### Technical field

The invention relates to the method for spinning of the liquid matrix in electrostatic field between at least one spinning electrode and against it arranged collecting electrode, while one of electrodes is connected to one pole of high voltage source and the second electrode is grounded, at which the liquid matrix being subject to spinning is in the electrostatic field on the active spinning zone of a cord of the spinning means of the spinning electrode.

Next to this the invention relates to the device for production of nanofibres through electrostatic spinning of liquid matrix in electric field between at least one spinning electrode and against it arranged collecting electrode, while one of electrodes is connected to one pole of high voltage source and the second electrode is connected to the opposite pole of high voltage source or grounded, and the spinning electrode contains at least one spinning member comprising the cord which contains the straight section parallel with the plane of depositing the nanofibres and/or with collecting electrode and it forms an active spinning zone of the cord.

Next to this the invention relates to the spinning electrode of the device for production of nanofibres through electrostatic spinning of liquid matrix in electric field between at least one spinning electrode and against it arranged at least one collecting electrode, while one of electrodes is connected to one pole of high voltage source and the second electrode is connected to opposite pole of high voltage source or grounded and the spinning electrode contains at least one in the carrying body of the spinning electrode mounted spinning member comprising the cord, which contains the straight section parallel with the plane of depositing the nanofibres and/or with the collecting electrode.

### Background art

The DE 101 36 255 B4 discloses the device for production of fibres from solution or melt of polymer with spinning electrode formed of a system of parallel wires positioned on a pair of endless stripes belted around two guiding cylinders, which are positioned one above another, while the lower guiding cylinder extends into the solution or melt of polymer. The spinning electrode is connected to the high voltage source together with the counter-electrode, which is formed of electrically conductive rotating stripe. Solution or melt of polymer are carried out by means of wires into electric field between the spinning electrode and the counter-electrode, where from the solution or melt of polymer the fibres are created, which are carried towards the counter-electrode and they fall to the web positioned on the counter-electrode. The disadvantage is a long time of staying of solution or melt of polymer in electric field, because the solution as well as the melt of polymer grows old quite quickly and during the spinning process it changes its properties which causes changes in parameters of created fibres, especially their diameter. Another disadvantage is positioning of wires of the spinning electrode on a pair of endless stripes, which must be electrically conductive and they affect very negatively an electric field being created between the spinning electrode and counter-electrode.

Further from the US 4.144.533 there is known the device for electrodynamic applying of solutions, dispersions and mixtures of solid substances on substratum material by means of a suitable electric field. The device contains two reservoirs with applied substrate, in which there are positioned pulleys belted with endless stripe, by means of which the substrate is delivered into electric field, in which it is applied on the substratum material, which is passing next to one or both lateral sides of endless stripe. This device is not able to produce fibres, but it is designated only for applying of solutions, dispersions, etc.

Further there are known the devices for production of nanofibres through electrostatic spinning of polymer solution, which contain the rotation spinning electrodes of an oblong shape, e.g. according to the WO 2005/024101 A1. This device contains the spinning electrode in the shape of cylinder, which according to its main axis rotates and by its lower part of surface is dipped into polymer solution. The polymer solution by surface of the cylinder is carried out into electric field between the spinning and collecting electrode, where the nanofibres are formed, which are carried towards the collecting electrode and before it they deposit on the substratum material. This device is able to produce very good nanofibres from water polymer solutions, nevertheless the solutions of polymers soluble in nonaqueous solvents can be processed by means of this device quite difficult. Further, the layer of nanofibres applied on the substratum material is not even.

Evenness of the created layer of nanofibres may be achieved by means of the device according to the CZ PV 2005-360, which describes the spinning electrode comprising a system of lamellas arranged radial and longitudinally towards the rotation axis of the spinning electrode, while the wrapping surface of a part of surface of the spinning electrode serving for carrying out of the polymer solution into electric field have the wrapping surface, which in the plane passing through axis of the spinning electrode and perpendicular to the plane of substratum material has a shape formed of equipotential line of the highest intensity of electric field between the spinning electrode and collecting electrode. Such spinning electrode is able to carry out a sufficient quantity of polymer solution into the most suitable places of electric field between the spinning and collecting electrode and at the same time to spin quite good also the nonaqueous polymer solutions and to create an even layer of nanofibres. Nevertheless the disadvantage is the demanding production of such spinning electrode, and due to this its price.

As to the production, less costly seems to be the spinning electrode according to the CZ PV 2006-545, which comprises a pair of faces, between which there are mounted by wire formed spinning members distributed evenly around the perimeter of the faces, while the faces are produced of electrically non-conductive material and all spinning members are mutually electrically connected in a conductive manner. Rotating spinning electrode created in this way is able to spin the water as well as nonaqueous polymer solutions and along its whole length it achieves quite high spinning effect as to its evenness, while electric field for spinning is formed between individual spinning members after their getting out from polymer solution and gradual approaching towards the collecting electrode.

Disadvantage of all rotating spinning electrodes of an oblong shape as well as the device for production of nanofibres through electrostatic spinning of polymer solutions, that contain the rotating spinning electrodes of oblong shape is especially high quantity of polymer solution in reservoir of polymer solution into which the spinning electrodes extend by a section of their surface. The reservoirs have a large opened surface on which not only massive evaporating of solvent from polymer solution occurs but also e.g. at the solutions with hygroscopic solvents, the polymer solution thickens and grows old very fast and it must be added and replaced continuously. This increases the costs for production of nanofibres and at the same time reduces quality of produced nanofibres. The polymer solution into electrostatic field for spinning is delivered by surface of cylindric rotating spinning electrode relatively slowly, and so it gradually gets dry on the surface and at the next dipping of the respective place of surface of the rotation spinning electrode there gets stuck a greater quantity of polymer solution, which gradually causes degradation of the spinning process and surface of the spinning electrode must be cleaned. To clean the spinning electrode, the spinning process must be interrupted. At the cord rotation spinning electrode the polymer solution into electrostatic field is delivered on individual cords, which represent active spinning zones and which during spinning change their position in electrostatic field. This brings further disadvantage, as during spinning on the active spinning zone of the spinning electrode the intensity is of electrostatic field is changed, which results in production of nanofibres of various diameters and reduces qualitative evenness of produced nanofibres.

The goal of the invention is to propose a method and create device for production of nanofibres through electrostatic spinning of polymer solutions possibly of liquid matrixes containing especially polymer solutions in electrostatic field, which at the industrial utilisation would be able from the long-term period to produce nanofibres of a constant quality with the lowest possible demand for maintenance and adjustment and to design the spinning electrode, which would remedy or at least reduce disadvantages of the background art.

### The principle of invention

The goal of the invention has been reached through the method of spinning of the liquid matrix in electrostatic field according to the invention, whose principle consists in that the cord is stationary or is displaceable in a direction of its length or is moving in a direction of its length either discontinuously or continuously. The liquid matrix is on the cord delivered in the direction of length of the cord, while is on it delivered in the active spinning zone by a movable device for application of liquid matrix or is on it delivered during motion of the cord in direction of its length by stationary device for application of liquid matrix arranged in a direction of motion of the cord in front of the active spinning zone. The active spinning zone during spinning process has a stable position towards the collecting electrode.

Stability and constancy in position of active spinning zone of the cord during spinning process secures evenness in creation of nanofibres in a narrow interval of diameters, which considerably increases the quality of produced nanofibrous layers. General increasing in quality of the spinning process is achieved through manner of transportation of the liquid matrix to the active spinning zone, which secures spinning of always fresh quality liquid matrix and optimises the spinning process. It is not necessary to interrupt the spinning process for the purpose to clean the spinning electrodes from the liquid matrix devalued through the previous cycles of spinning and/or by effect of surrounding atmosphere which got stuck on the active spinning zones of the spinning members of the spinning electrode.

According to the claim 2 it is advantageous if the liquid matrix is applied to the stationary cord in the active spinning zone in electrostatic field during spinning, while the liquid matrix devalued by spinning and/or by effect of surrounding atmosphere is wiped off from the stationary cord in case of need. On the stationary active spinning zone of the cord, applying of the fresh liquid matrix as well as cleaning of surface of the cord from residuals of liquid matrix is performed during the spinning process, which increases productivity of the spinning.

To secure optimisation of the spinning process it is advantageous if the liquid matrix is on the stationary cord in the active spinning zone in electrostatic field applied in optional intervals and in other optional intervals the devalued liquid matrix is wiped off the cord, as it is described in the claim 3.

In case of the spinning electrode, which contains a greater quantity of active spinning zones arranged side by side in one plane, for the efficiency of the spinning process the method is advantageous, when simultaneously there are wiped off several active spinning zones, which are not adjacent one to another mutually, so that during wiping off the spinning process is running on the adjacent active spinning zones.

According to another possible embodiment of the method according to the invention, by discontinuous motion of the cord is the liquid matrix being applied on the cord in the active spinning zone, which provides further possibilities of applying the liquid matrix on the active spinning zone and further possibilities for wiping off the devalued liquid matrix from surface of the cord and it enables to omit wiping off the devalued liquid matrix.

The principle of the device according to the invention consists in that the cord of the spinning member is stationary or is displaceable in a direction of its length or is movable in a direction of its length either discontinuously or continuously and comprises at least one active spinning zone, which has a stable position towards the collecting electrode, and to the cord there is assigned the device for application of the liquid matrix on the cord in a direction of length of the cord.

As it became apparent already at some solutions according to the background art, the cord formed of a thin wire represents a very suitable means for electrostatic spinning of liquid matrixes. A stable position of active spinning zone of the cord towards the collecting electrode brings stability in spinning conditions and due to this increases quality of produced nanofibres, especially stability of their diameters.

Further it is advantageous, if cord is a stationary one and in the active spinning zone there is to the cord assigned the device for application of the liquid matrix on the cord and the device for wiping off the liquid matrix from the cord in active spinning zone. The stationary cord simplifies the structure of spinning electrode, as such spinning electrode does not contain the means for driving of the cord and it does not require any means for continual stretching of the cord.

To secure a qualitative low variable liquid matrix for spinning, it is advantageous if the device for application of the liquid matrix on the cord and the device for wiping off the liquid matrix from the cord are mounted in the carrying body of the spinning electrode reversibly displaceably along the active spinning zone of the cord.

The cord is moveable in direction of its length, at the same time it is not decisive if it moves steadily or with breaks.

When compared with background art, during spinning by movement of the cord through electrostatic field in direction of length of the cord it is achieved that into electrostatic field, in which the spinning is running, the cord enters as a clean without liquid matrix devalued during the previous spinning cycles, so that on surface of the cord during spinning process only fresh liquid matrix is to be found, and it is not necessary to interrupt the spinning process for the purpose to clean the spinning electrode from the liquid matrix devalued by the previous spinning cycles and/or by effect of surrounding atmosphere and from the one got stuck on active spinning zones of the spinning members of the spinning electrode.

In another embodiment the cord of the spinning member has a definite length several times greater than the active spinning zone of the cord and its beginning is mounted on the unwinding reel, and its end is mounted on the winding reel, while at least the winding reel is coupled with the winding drive. At this embodiment, if the need may be, the cord enters into the active spinning zone of the cord without residuals of liquid matrix devalued during previous spinning cycles and/or by effect of surrounding atmosphere.

According to another embodiment of the cord being able to move in direction of its length the cord is formed of indefinite loop belted at least around the driving pulley and around the stretching pulley. This arrangement, in comparison with the previous embodiment, shortens the total length of the cord, nevertheless when compared with stationary cord it requires the drive assigned to the driving pulley.

Both the device with definite length of cord and the device with indefinite cord, which is formed of indefinite loop, may be with advantage performed with two active spinning zones in which the cord moves in an opposite direction. Both spinning zones are arranged in a plane parallel with plane of depositing the nanofibres and/or with the collecting electrode. This arrangement, next to others, enables to spin two liquid matrixes using one such cord.

Reversibly displaceable device for applying the liquid matrix on the active zone of the cord the liquid matrix on the cord in the desired time as well as in the desired quantity, while the desired quantity of the liquid matrix applied on the mandrel may be achieved through multiple movement of the device for applying along the active spinning zone of the cord.

The device for production of layer of nanofibres through electrostatic spinning of the liquid matrix in electric field usually comprises a greater number of spinning members arranged side by side. Alignment with the collecting electrode or with plane of collecting electrodes ensures evenness of the produced layer of nanofibres.

At all above mentioned embodiments of the device according to the invention the cord may be made of electrically conductive material or of electrically non-conductive material, while in case of electrically non-conductive material of the cord the cord is in a permanent contact with the liquid matrix into which the electric current is supplied.

The spinning electrode according to the invention is described in the further claims, while in the basic embodiment the cord is stationary or displaceable in a direction of its length or is movable in a direction of its length either discontinuously or continuously, while the active spinning zone of the cord has a stable position in the carrying body of the spinning electrode and to the cord there is assigned the device for application of the liquid matrix on the cord in direction of length of the cord, which is arranged in the carrying body of the spinning electrode.

### Description of the drawing

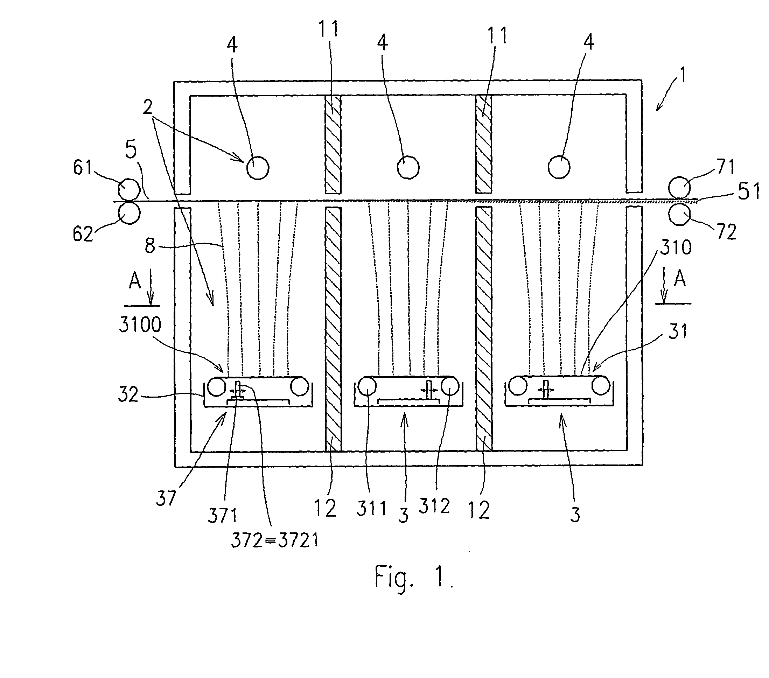

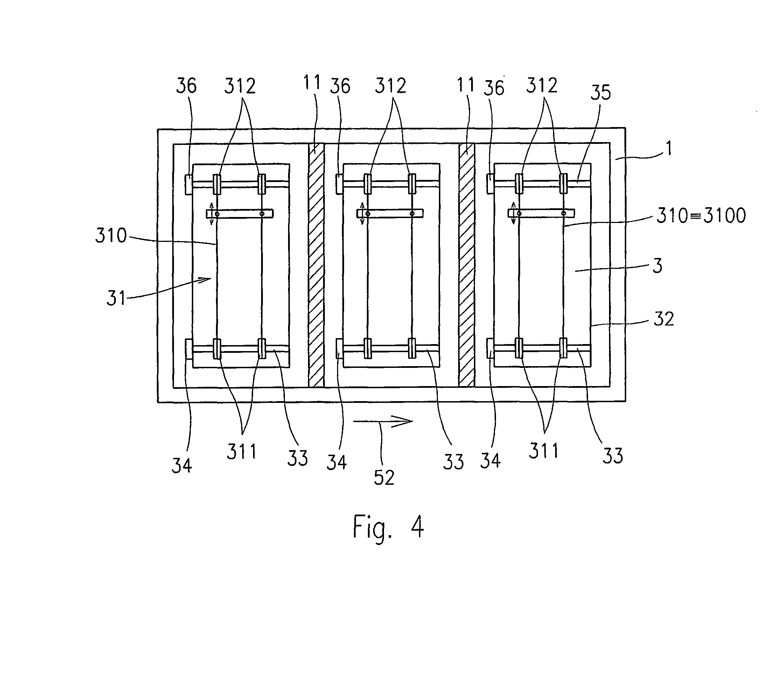

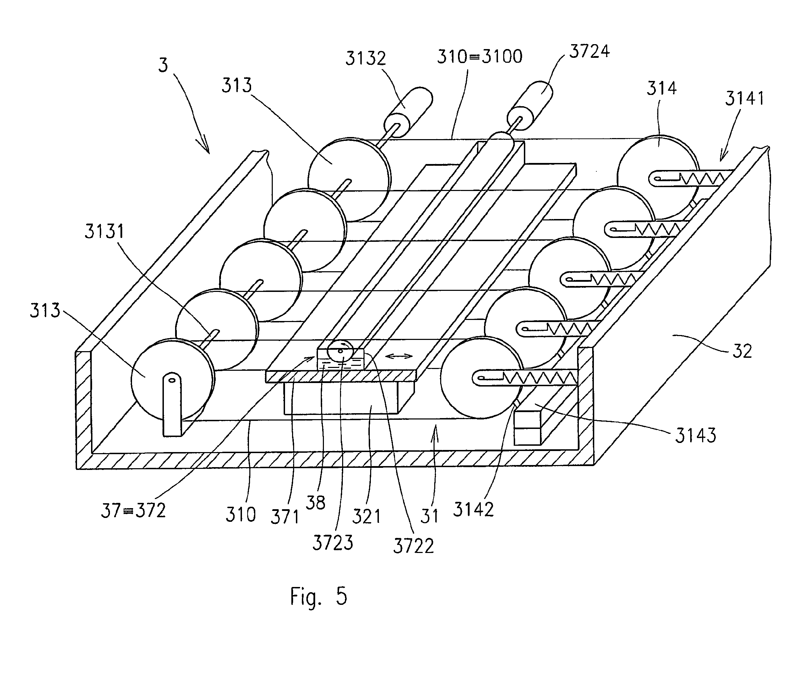

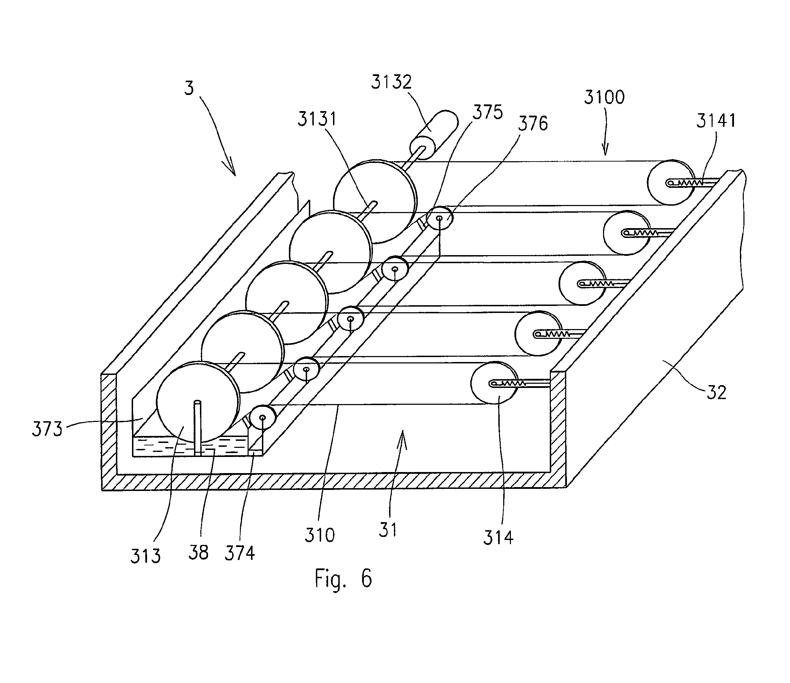

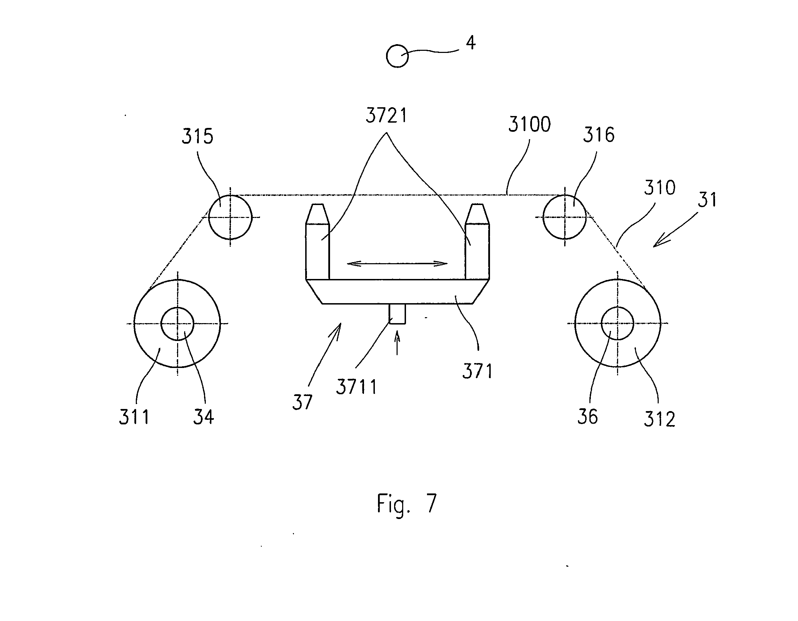

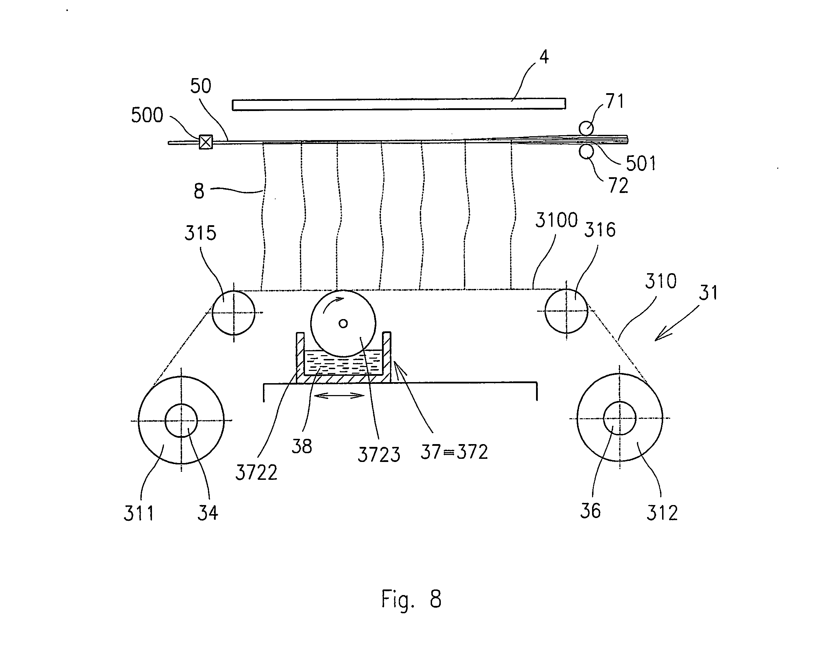

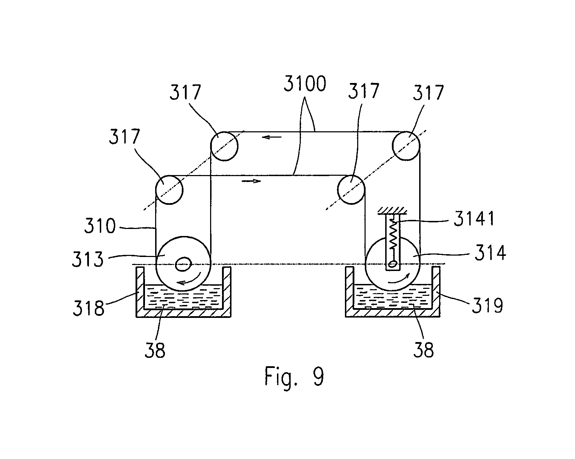

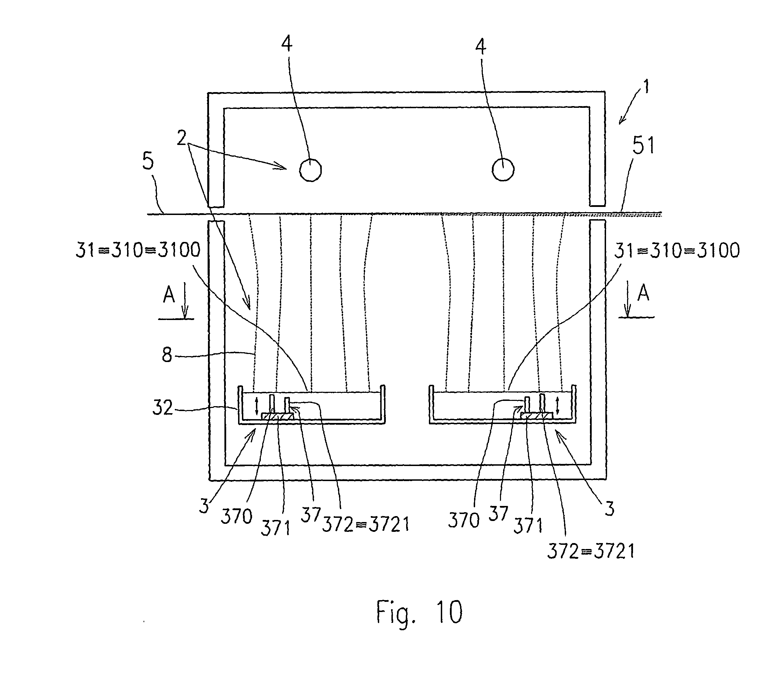

The device according to the invention is schematically represented in the attached drawings, where the Fig. 1 shows a longitudinal section through a first variant of embodiment of the device with three spinning units, the Fig. 2 A-A section through the device according to the Fig. 1 with spinning electrodes, whose spinning members contain cords of definite length arranged parallel with direction of motion of the substratum material, the Fig. 3 A-A section through the device according to the Fig. 1 with spinning electrodes whose spinning members contain cords of definite length arranged askew to the direction of motion of the substratum material, the Fig. 4 shows A-A section through the device according to the Fig. 1 with spinning electrodes, whose spinning members contain the cords of definite length arranged perpendicular to the direction of motion of the substratum material, the Fig. 5 section of axonometric view to the spinning electrode with spinning members with indefinite length of the cord and displaceable applying device of the liquid matrix, the Fig. 6 section of axonometric view to the spinning electrode with spinning members with indefinite length of the cord with applying device of the liquid matrix formed of reservoir of liquid matrix, the Fig. 7 shows detail if the spinning member with definite length of the cord with displaceable applying device of the liquid matrix formed by capillaries, the Fig. 8 detail of the spinning member with definite length of the cord with displaceable applying device of the liquid matrix formed of rotating roller, the Fig. 9 detail of the spinning member with indefinite cord, whose both branches form the active spinning zone, the Fig. 10 longitudinal section through the device with spinning electrodes with fixed cords, and the Fig. 11 A-A section through the device according to the Fig. 10.

### Examples of embodiment

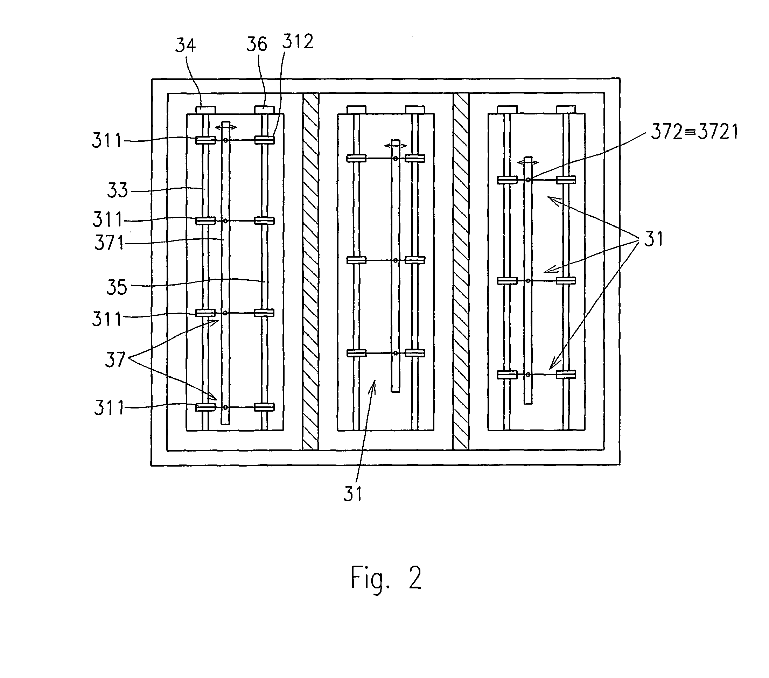

In the Fig. 1 and 2 represented exemplary embodiment of the device for production of nanofibres through electrostatic spinning of the liquid matrix, whose substantial part is formed by the solution or melt of polymer or mixture of polymers, comprises the spinning chamber **1**, which by means of insulation partitions **11**, **12** is divided into three spinning spaces in which there are arranged the spinning units **2**, out of which each contains the spinning electrode **3** and against it arranged the collecting electrode **4.** Between the spinning electrode **3** and the collecting electrode **4** electrostatic field of high intensity is created in a known manner. In the spinning chamber **1** in a known not closer specified manner is performed the passage for the substratum material **5,** which is being unwound in the known not represented unwinding device and into the spinning chamber **1** it is brought by means of feeding rollers **61**, **62**. From the spinning chamber **1** the substratum material **5** is taken off by means of take-off rollers **71**, **72**, behind which in a known not represented manner it is being wound the in the not represented winding device. Here described insulation partitions **11**, **12** serve only to mutual screening of in sequence following spinning units **2** and they are not substantial for the submitted invention.

The spinning electrode **3** contains several spinning members **31** arranged in the carrying body **32**. Each spinning member **31** contains one cord **310**, which is mounted on the unwinding reel **311** and on the winding reel **312**, while the unwinding reel **311** and the winding reel **312** at the same time serve as the stretching means of the cord **310**. The straight section of the cord **310** between the unwinding reel **311** and winding reel **312** is parallel with direction of motion of the substratum material **5** and it creates the active spinning zone **3100** of the cord **310** of the spinning member **31**. The cord **310** is made of a thin metal wire which is electrically conductive or of a plastic line which is electrically not conductive.

The unwinding reels **311** of the spinning members **31** of one spinning electrode **3** are mounted on a common unwinding shaft **33**, which is mounted in the carrying body **32** and is coupled with the unwinding drive **34**. The winding reels **312** of the spinning members **31** of one spinning electrode **3** are mounted on a common winding shaft **35**, which is mounted in the carrying body **32** and it is coupled with the winding drive **36**. The unwinding drive **34** and winding drive **36** are in a known manner coupled, either mechanically or electrically, to secure the necessary stretching of the cord **310** in its active spinning zone **3100** and to secure a continuous or interrupted forward motion of the cord **310** in its active spinning zone **3100**. The cord **310** of each spinning member **31** is therefore positioned displaceably in direction of its length, which means that the active spinning zone **3100** of each cord moves through electrostatic field continuously or with intervals in direction of its length. The active spinning zones **3100** of the cords **310** of all spinning members **31** of one spinning electrode **3** are arranged in a plane, which is parallel with the collecting electrode **4** and with substratum material **5**.

Under the active spinning zones **3100** of the cords **310** of spinning members **31** of one spinning electrode **3** on the carrying body **32** is mounted the device **37** for application of the fluid matrix **38** to the active spinning zones **3100** of the cords. Each of the cords **310** therefore creates the carrying means of the fluid matrix **38**. The device **37** for application of the fluid matrix contains the spar **371** displaceably mounted on the carrying body **32** and coupled with the known not represented drive for securing of its reversible motion along the length of active spinning zones **3100** of the cords. On the spar **371** under each active spinning zone **3100** of the cord there is mounted one application means **372**, which in the represented embodiment is formed of capillary application means **3721.** Cavity of the capillary application means **3721** is connected with cavity in the spar **371**, which in a known not represented manner is connected to the not represented reservoir of fluid matrix **38**. The fluid matrix **38** earlier than it reaches the cavity of capillary application means **3721** is passing through the known not represented electrical member, which is connected to one pole of source of electrical potential and the fluid matrix **38** then brings the necessary electrical potential to the active spinning zone **3100** of the cord, which enables creating of electrostatic field of a high intensity between the active spinning zone **3100** of the cord of the corresponding spinning member **31** and the collecting electrode **4** of the respective spinning unit **2**. This electrostatic field of high intensity is able from the fluid matrix **38**, being found on the active spinning zone **3100** of the cord, in a known manner to withdraw the beams of fluid matrix **38**, which in electrostatic field of high intensity fall into nanofibres **8**, which by acting of electrostatic field of a high intensity are carried to the collecting electrode **4** and they deposit on the substratum material **5**, on which they create the nanofibrous layer **51**. The fluid matrix **38** may further contain another substances, which in a desired way modify properties of the produced nanofibres.

The fluid matrix **38** to the active spinning zone **3100** is applied in electrostatic field during the spinning through motion of the device **37** for application the fluid matrix **38** under active spinning zones **3100** of the cords. In the described example of embodiment according to the Fig. 1 during applying, the application means **372** is moving which is in contact with active spinning zone **3100** of the standing cord **310**. Nevertheless motion of the cord **310**, in other words of its active spinning zone **3100** during application of the fluid matrix **38** is not excluded.

At embodiment according to the Fig. 2 in direction of the substratum material **5** three spinning units **2** are arranged one after another, out of which on the picture are represented three spinning electrodes **3**. The first spinning electrode **3** contains four spinning members **31** arranged in the carrying body **32** in the same distance one from another. The second and the third electrode **3** contains three spinning members **31** arranged in the same mutual distance, while in direction of motion of the carrying material **5** the spinning means **31** of one after another following spinning electrodes **3** are arranged in space between the spinning means **31** of the previous spinning electrode **3**, which reduces forming of stripes of nanofibrous layer **51** or it prevents forming of stripes totally.

Elimination of stripes forming in the resultant nanofibrous layer **51** may be achieved also by other methods, e.g. according to the not represented embodiment, which comprises at least two spinning electrodes **3** with equal number of spinning members **31**, which are in the carrying bodies **32** arranged in equal position and with equal mutual distance. The different positions of the spinning members **31** of one after another positioned spinning electrodes **3** is achieved through setting the position of carrying bodies **32** of one after another following spinning electrodes **3**.

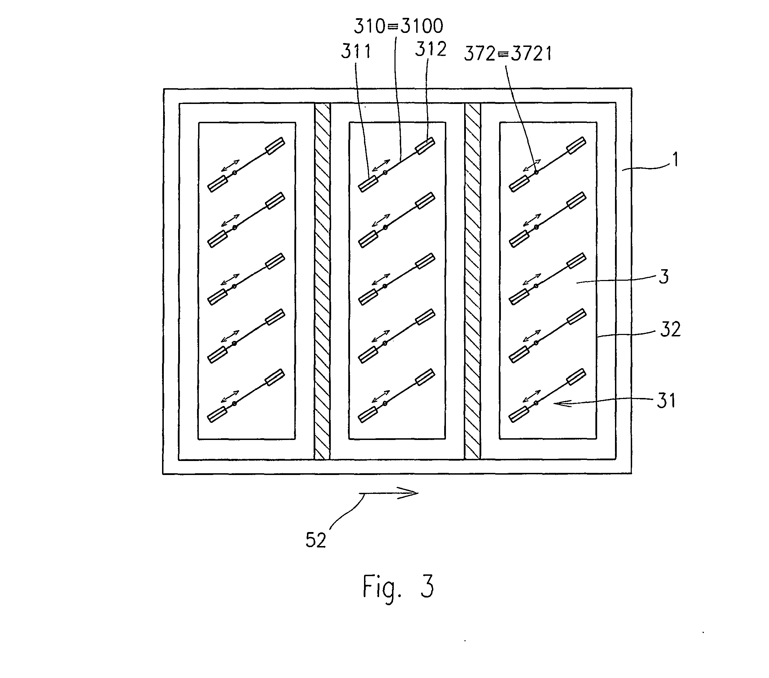

At the example of embodiment according to the Fig. 3 in the spinning chamber **1** are arranged three spinning units, of which are represented the spinning electrodes **3**, while the inner space of the spinning chamber **1** is not separated by means of insulation partitions between the spinning units as at the previous embodiment. The spinning electrodes **3** contain the carrying bodies **32**, in which askew to the direction **52** of motion of the substratum material are arranged the spinning members **31** performed in the same manner as in the previous exemplary embodiment. Unwinding reels **311** as well as the winding reels **312** of the spinning members are provided with the known not represented individual drives, which are coupled to ensure the necessary stretching of the cord **310** in the active spinning zone **3100** and to ensure a continual or interrupted motion of the cord **310** in direction of its length. The application means **372** of the fluid matrix **38** are mounted displaceably under the active spinning zones **3100** of the cords. The device works in the same manner as the above described embodiment according to the Fig. 1 and 2.

At the example of embodiment according to the Fig. 4 the spinning chamber **1** comprises three spinning units **2** separated one from another by insulation partitions **11**. From the spinning units represented are the spinning electrodes **3**, which comprise the carrying bodies **32**, in which perpendicular to direction **52** of motion of the substratum material **5** are arranged the spinning members **31** performed in the same manner as at embodiment according to the Fig. 1 and 2. Unwinding reels **311** of the spinning members **31** of one spinning electrode **3** are mounted on the common unwinding shaft **33** that is mounted in the carrying body **32** and is coupled with the unwinding drive **34**. Winding reels **312** of the spinning members **31** of one spinning electrode **3** are mounted on the common winding shaft **35**, that is mounted in the carrying body **32** and is coupled with the winding drive **36**. The necessary stretching of the cord **310** in the active spinning zone **3100** is achieved by a linkage between the unwinding drive **34** and winding drive **36** of the spinning electrode **3**. The active spinning zones **3100** of the cords **310** of all spinning members **31** of one spinning electrode **3** are arranged in a plane, which is parallel with the collecting electrode **4** and with the substratum material **5**. The device works in the same manner as embodiment according to the Fig. 1 and 2.

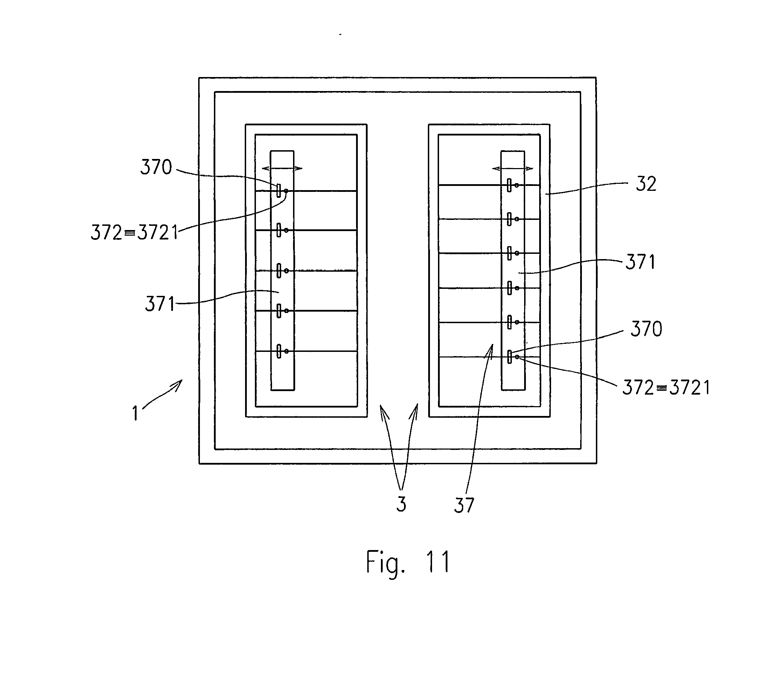

The Fig. 10 and 11 represents another alternative embodiment according to the invention, at which in the spinning chamber **1** are arranged two spinning units **2**, out of which each comprises the spinning electrode **3** and against it arranged collecting electrode **4**, between which in a known manner is performed the electrostatic field of high intensity. In the spinning chamber **1** is performed a passage for the substratum material **5**, on which during spinning the nanofibres **8** are deposited into the layer **51** of nanofibres. Each spinning electrode **3** contains the carrying body **32**, between whose side walls in a certain distance one from another are stretched the independent cords **310**, which in the side walls of the carrying body **32** are firmly mounted, they are of a definite constant length and are parallel with the plane of substratum material **5**. Individual cords **310** form the spinning members **31** and nearly whole their length forms the active spinning zone **3100** of the cord.

In the represented embodiment the cords **310** are in the direction of taking-off the produced nanofibrous layer **52** of the following spinning electrodes **3** situated between the cords **310** of the preceding spinning electrode **3**, which contributes to reduction in forming of stripes of the produced nanofibrous layer **52** or it nearly eliminates forming of stripes.

Under the active spinning zones **3100** of the cords **310** of each spinning electrode **3** on the carrying body **32** displaceably is mounted the device **37** for application of the liquid matrix **38** to the active spinning zones **3100** of the cords. The device **37** for application of the liquid matrix comprises the spar **371** displaceably mounted on the carrying body **32** and coupled with the not represented drive to secure its reversible motion along the active spinning zones **3100** of the cords. Under each active spinning zone **3100** on the spar **371** is mounted one application means **372** of the liquid matrix **38** formed in the represented embodiment by the application means **3721**, which is simultaneously arranged reversibly displaceably in direction to the active spinning zone **3100** of the cord and from it. On the spar **371** there is further arranged the device **370** for wiping off the liquid matrix **38** from the active spinning zone **3100** of the cord which is simultaneously independently on the application means **372** arranged reversibly displaceably in direction of the active spinning zone **3100** of the cord and from it.

Electrical potential is to the active spinning zones **3100** brought through their connection to one pole of the source or through grounding.

If the electrical potential to the active spinning zones **3100** of the cord is brought by means of the liquid matrix **38**, as it is in detail described at embodiment according to the Fig. 1, the application means **372** is in a permanent contact with the respective active spinning zone **3100** of the cord.

In the not represented embodiment the application means **372** of the liquid matrix **38** are arranged for each active spinning zone **3100** of the cord independently. The device **370** for wiping off the liquid matrix **38** for each active spinning zone **3100** are arranged separately independent on the application means **372** or together with them. According to their arrangement, the application means **372** of the liquid matrix and the device **370** for wiping off the liquid matrix **38** enable various combinations of their activity.

For example the liquid matrix **38** is applied to the stationary active spinning zone **3100** during spinning and the active spinning zone **3100** is in a constant contact with to it corresponding application means **372** of the liquid matrix **38**, through which to the active spinning zone **3100** the electrical potential is brought simultaneously. The liquid matrix **38** devalued through spinning and/or by action of surrounding atmosphere is from the active spinning zone **3100** wiped off in case of need.

Or the liquid matrix **38** is applied to the stationary active spinning zone **3100** during spinning and the active spinning zone **3100** is to it corresponding application means **372** in contact only during the period of application, and after then the application means **372** is from the active spinning zone **3100** of the cord taken away and does not touch it. The liquid matrix **38** devalued by spinning and/or by effect of surrounding atmosphere is from the active spinning zone **3100** wiped off in the same way as in the previous embodiment in case of need.

The liquid matrix **38** to the stationary active spinning zone **3100** of the cord in electrostatic field may be applied in optional intervals, and in other optional intervals the devalued liquid matrix **38** may be wiped off from the active spinning zone.

Wiping off the devalued liquid matrix **38** may be performed before application of the liquid matrix **38** to the active spinning zone **3100** of the cord and it may be performed before each application of the liquid matrix **38**.

Wiping off the got stuck devalued liquid matrix **38** from the active spinning zone **3100** of the cord at the spinning electrodes **3** containing more active spinning zones **3100** of the cords arranged side by side in one plane is performed simultaneously on more active spinning zones **3100** of the cords, while between one after another following active spinning zones **3100** of the cords being wiped off, always at least one active spinning zone **3100** of the cord is to be found with the applied liquid matrix **38**, which at this time is not being wiped off.

The active spinning zone **3100** of the cord, which is firmly and without possibility of movement arranged in the carrying body **32** of the spinning electrode **3**, may be arranged parallel with the direction **52** of motion of the substratum material **5** or with the direction of taking off the produced nanofibrous layer **52**, as it is represented in the Fig. 10 and 11. Or the active spinning zone **3100** may be of the direction perpendicular to the above mentioned direction **52** of motion of substratum material **5** or it may with this direction form any desired angle.

The spinning electrode **3** represented in the Fig. 5 contains the carrying body **32** in which are arranged the spinning members **31**. Each spinning member **31** comprises the driving pulley **313** and the stretching pulley **314**, which are belted by infinite cord **310**, whose straight section adjacent to the collecting electrode **4** forms the active spinning zone **3100**. The active spinning zones **3100** of the cords **310** of all spinning members **31** of one spinning electrode **3** are arranged flush. If the spinning electrode **3** is in the spinning chamber **1** of the device, it is parallel with the collecting electrode **4** and with the substratum material **5**. The driving pulleys **313** of all spinning members **31** of one spinning electrode **3** are mounted on a common shaft **3131** of the driving pulleys, which is rotatably mounted in the carrying body **32** and coupled with the drive **3132** of driving pulley. The drive **3132** serves to produce continuous or interrupted rotation motion of the shaft **3131** of the driving pulleys **313** Each stretching pulley **314** of individual spinning members **31** is mounted on the stretcher **3141**, which ensures position of the stretching pulley **314** and the necessary stretching of infinite cord **310**.

Between the spinning members **31** on the carrying body **32** are mounted at least two supports **321,** on which across all the spinning members **31** is arranged the spar **371,** on which also across all the spinning members **31** is mounted the device **37** for application of the fluid matrix **38** to the active sections of the spinning zones **3100** of the cords **310**. The device **37** for application of the fluid matrix **38** in embodiment according to the Fig. 5 comprises the reversibly displaceably in the direction of length of active spinning zones **3100** of the cords **310** arranged application means **372** formed of from above opened reservoir **3722** of the fluid matrix **38**, in which is rotatably mounted the application roller **3723**, whose upper section is in contact with the active spinning zones **3100** of all cords **310** of the spinning members **31** of the respective spinning electrode **3**. The application roller **3723** is coupled with the drive **3724** of the application roller. Reservoir **3722** of the fluid matrix **38** is coupled with the known not represented drive, which secures its reversible or interrupted motion under the active spinning zones **3100** of the cords. By motion of **3722** or by the whole device **37** for application of the fluid matrix **38** along the active spinning zone **3100** of the cord the application of the liquid matrix is ensured to the active spinning zone **3100** of the cord.

The application roller **3723** may at alternative not represented embodiment be replaced by a system of disks which by lower section of their perimeter are dipped into the liquid matrix **38** and upper section of their perimeter is in contact with active spinning zone **3100** of the respective cord **310**. Or the device **37** for application of the liquid matrix **39** may contain the capillary application means **3721** as at embodiment according to the Fig. 1 to 4, possibly other suitable application means.

In the represented embodiment to the lower part of each stretching pulley **314** are assigned the wiping off means **3142** of the non-fibrous liquid matrix **38**, which was not subjected to spinning in the active spinning zone **3100**. The wiping off means **3142** lead into the auxiliary reservoir **3143**.

During spinning at this embodiment the cord **310** in its active spinning zone **3100** may move permanently and continuously or it may move in an interrupted manner. In case of a continuous motion of the cord **310** the device **37** for application of the fluid matrix **38** is situated close to the driving pulleys **313** and the fluid matrix **38** is continuously applied onto a slowly moving cords **310** of individual spinning members **31**. Application of the fluid matrix **38** is performed by rotation of the application roller **3723**, which by its circumference carries out the liquid matrix **38** from the reservoir **3722.** The cords **310** are brought into motion by the driving pulleys **313** and stretched by the stretchers **3141**. After passage of the cord **310** through its active spinning zone **3100** the non fibrous liquid matrix **38**, which is devalued by the spinning process and/or the effect of surrounding atmosphere, is wiped off by means of the wiping off means **3142** assigned to the stretching pulley **314** and is taken off into the auxiliary reservoir **3143**. In case of interrupted motion of the cord **310** application of the liquid matrix **38** is performed by motion of the device **37** for application of the liquid matrix along the active spinning zones **3100** of the cords, while the application roller **3723** rotates and carries out by its perimeter the liquid matrix **38** from the reservoir **3722**. After application of the liquid matrix **38** to the active spinning zones **3100** of the cords the device **37** for application of the liquid matrix takes one its extreme positions and either remains in contact with the cord **310**, which is made of conductive or non conductive material, and transfers to it the electrical potential or it draws away from the cord **310** in cases when the electrical potential is brought to the active spinning zone **3100** of the cord by another manner.

Another embodiment of the spinning electrode **3** is represented in the Fig. 6. The spinning members **31** are arranged in the carrying body **32** similarly as at the embodiment according to the Fig. 5 and they contain the driving pulley **313** and the stretching pulley **314**, which are belted by the infinite cord **310**, whose straight section adjacent to the collecting electrode forms the active spinning zone **3100**, while the active spinning zones **3100** of all spinning members **31** of one spinning electrode **3** are arranged in uniplanar manner. The stretching pulleys **314** of the cords **310** of the spinning members **31** in the carrying body **32** are arranged in the same manner as in example of embodiment according to the Fig. 5 on the stretchers **3141**. The driving pulleys **313** of all spinning members **31** of one spinning electrode **3** are mounted on the common shaft **3131** of the driving pulleys, which is rotatably mounted in the stationary reservoir **373**, which is partially filled with the liquid matrix **38** and which is firmly mounted in the carrying body **32**. The driving pulleys **313** extend by a section of their by the cord **310** belted circumference under the level of the liquid matrix **38** in stationary reservoir **373**, which at this embodiment forms the device **37** for application of the liquid matrix **38** to the cord **310**, while into the active zone **3100** the cord **310** enters with applied liquid matrix **38** for spinning. From the side of entry of the reversible portion of the endless cord **310** in the stationary reservoir **373** is performed the waste reservoir **374**, which is provided with spattles **375**, through which the cords **310** are guided before their entry to the driving pulley **313**. By acting of the spattle **375** from the cord **310** are removed the residuals of the liquid matrix **38**, which was not subjected to spinning in the active spinning zone **3100**. For better determining of the path of the cord **310** before entry into the sphere of the stationary reservoir **373** the cord **310** of each spinning member **31** is guided through the guiding member **376**, which at the represented embodiment is formed of rotation guiding pulley, nevertheless it may be formed of another known guiding element.

At this embodiment the cord **310** is in a permanent motion and the liquid matrix **38** from the stationary reservoir **373** is carried out by the cord **310**, which at its motion gets under the level of the liquid matrix **38** in the stationary reservoir **373** due to belting of the driving pulley **313**. After leaving the perimeter of the driving pulley **313** the cord **310** enters with the liquid matrix **38** on its surface into its active spinning zone **3100**, where spinning is running. The active spinning zone **3100** of the cord is finished by the stretching pulley **314**, which is belted by the cord **310** and it returns through the guiding member **376** and the spattle **375** to perimeter of the driving pulley **313**.

The Fig. 7 represents one spinning member **31**, which comprises the unwinding reel **311**, from which the cord **310** is guided through the rotatably mounted input guiding pulley **315** and rotatably mounted output guiding pulley **316** to the winding reel **312**. The unwinding reel **311** is coupled with the unwinding drive **34** and the winding reel **312** is coupled with the winding drive **36**. Part of the cord **310** between the input guiding pulley **315** and output guiding pulley **316** forms the active spinning zone **3100**. From the side against the collecting electrode **4** to the active spinning zone **3100** is assigned the device **37** for application of the liquid matrix **38** to the active spinning zone **3100** of the cord **310**, which comprises two capillary application means **3721** of the liquid matrix which are mounted on the spar **371** arranged reversibly displaceably along the active spinning zone **3100**. The spar **371** is provided with inlet **3711** of the liquid matrix.

In case of need to apply the liquid matrix **38** to the active spinning zone **3100** of the cord **310** , the spar **371** in a known manner sets into motion along the whole active spinning zone **3100** and into the capillary application means **3721** the fluid matrix **38** is brought, which is forced out from these means and it gets stuck on the active spinning zone **3100** of the cord **310**. After application of a sufficient quantity of liquid matrix **38** the spar **371** stops and application of the liquid matrix **38** is interrupted. Once on the active spinning zone **3100** of the cord **310** quantity of the liquid matrix **38** drops to the minimum capable for spinning, when the spinning process is not finished yet due to lack of the liquid matrix **38**, but it is already endangered, the spar **371** sets the device **37** for application of the liquid matrix again into motion. The spar **371** may perform one or more motions between its dead points. Motion of the spar **371**, namely of the capillary application means **3721** , is as frequent and fast so that in the area of the active spinning zone **3100** there is a sufficient quantity of the liquid matrix for spinning.

The Fig. 8 represents the exemplary embodiment of the spinning unit **2** for application of nanofibres **8** to the linear fibrous formation **50**, as it is in detail described in the CZ PV 2007-179. The spinning member **31** of the spinning unit **2** is performed in the same way as in the embodiment according to the Fig. 7, only there is used other device **37** for application of the liquid matrix **38** to the active spinning zone **3100** of the cord **310**. Parallel with the active spinning zone **3100** the collecting electrode **4** is mounted, and parallel with the collecting electrode **4** is also guided the linear fibrous formation **50**, which before entry into the spinning space between the active spinning zone 3100 and the collecting electrode **4** is passing through the known device **500** for imparting the false twist and behind the spinning space it is taken off by means of the take-up rollers **71**, **72**. Application means **372** of the device **37** for application of the liquid matrix comprises from above opened reservoir **3722** of the liquid matrix **38**, in which is rotatably mounted the application roller **3723** coupled with the not represented drive. Upper part of the application roller **3723** is in contact with active spinning zone **3100** of the cord **310**. The reservoir **3722** is mounted displaceably along the active spinning zone **3100** of the cord **310** and it is coupled with the known not represented drive, that secures its reversible continuous or interrupted motion under the active spinning zone **3100**. Requirements as to motion of the reservoir **3722** with the application roller **3723** are identical as at the preceding embodiments.

The Fig. 9 schematically represents embodiment of the spinning member **31** with two active spinning zones **3100**. Endless cord **310** is belted around the driving pulley **313** and the stretching pulley **314**. Between them it is guided via the guiding pulley **317**, while the guiding pulleys **317** on the side from the driving pulley **313** are axial and their common axis is arranged above the driving pulley **313** parallel with the plane inlaid by this driving pulley **313** and it is perpendicular to direction of rotation axis of the driving pulley **313**. The guiding pulleys **317** on the side of stretching pulley **314** are axial and their common axis is arranged above the stretching pulley **314** parallel with the plane inlaid by this stretching pulley **314** and it is perpendicular to the direction of rotation axis of the stretching pulley **314**. The driving pulley **313** is rotatably mounted in the first reservoir **318** of the liquid matrix and it extends by a section of its perimeter under the level. The stretching pulley **314** is rotatably mounted in the second reservoir **319** of the liquid matrix and it extends by a section of its perimeter under the level, while the liquid matrixes **38** in both reservoirs may differ one from another. The cord **310** in each of its active spinning zone **3100** moves in opposite direction. This arrangement of spinning member enables various variants of solution, for which there are two active spinning zones **3100**, that are preferably arranged in one plane and in case of more spinning members **31** arranged side by side in the spinning electrode **3**, all active spinning zones **3100** of all spinning members are in one plane. Nevertheless in the not represented embodiment each spinning zone of one spinning member **31** may be arranged in another plane.

According to another not represented example of embodiment the spinning member **31** contains one cord **310** of finite length or the cord **310** infinite, that comprises more than two active spinning zones **3100**, such embodiment is more demanding as to the structure than the described examples of embodiments, nevertheless it falls within the scope of invention.

Within the scope of invention also fall all combinations of the described embodiments and their modifications arisen especially by substitution of part of the devices or part of the elements of the devices by equivalents or by similar parts or by parts with the same or similar function, which especially relates to various possible variants of the device **37** for application of liquid matrix, wiping-off means **3142** and spattles **375**, arrangement of spinning members **31** and their parts, their drive, etc.

**List of referential markings**
- 1: spinning chamber
- 11, 12: insulation partition
- 2: spinning unit
- 3: spinning electrode
- 31: spinning member
- 310: cord
- 3100: active spinning zone of the cord
- 311: unwinding reel
- 312: winding reel
- 313: driving pulley
- 3131: shaft of driving pulleys
- 3132: drive of driving pulleys
- 314: stretching pulley
- 3141: stretcher
- 3142: wiping-off means of the liquid matrix
- 3143: auxiliary reservoir
- 315: input guiding pulley
- 316: output guiding pulley
- 317: guiding pulleys
- 318: first reservoir of liquid matrix
- 319: second reservoir of liquid matrix
- 32: carrying body
- 321: support
- 33: unwinding shaft
- 34: unwinding drive
- 35: winding shaft
- 36: winding drive
- 37: device for application of liquid matrix
- 370: device for wiping-off the liquid matrix
- 371: spar
- 3711: inlet of liquid matrix
- 372: application means
- 3721: capillary application means
- 3722: from above opened reservoir of the fluid matrix
- 3723: application roller
- 3724: drive of application roller
- 373: stationary reservoir
- 374: waste reservoir
- 375: spattle
- 376: guiding member
- 38: liquid matrix
- 4: collecting electrode
- 5: substratum material
- 51: nanofibrous layer
- 52: direction of motion of substratum material
- 61, 62: feeding roller
- 71, 72: take-up roller
- 8: nanofibres

## Claims

1. Method for spinning the liquid matrix (38) in electrostatic field between at least one spinning electrode (3) and against it arranged collecting electrode (4), at which the liquid matrix (38) is being subject to spinning on a surface of a cord (310) which is to be found against the collecting electrode (4) and which represents an active spinning zone (3100)**characterised in that** the cord (310) is stationary or is displaceable in a direction of its length or is moving in a direction of its length either discontinuously or continuously, while the liquid matrix (38) is on the cord (310) delivered in the direction of length of the cord (310), while is on it delivered in the active spinning zone (3100) by a movable device for application of liquid matrix (38) or is on it delivered during motion of the cord (310) in direction of its length by stationary device for application of liquid matrix (38) arranged in a direction of motion of the cord (310) in front of the active spinning zone (3100), while the active spinning zone (3100) during spinning process has a stable position towards the collecting electrode (4).

2. Method according to the claim 1, **characterised in that** the liquid matrix (38) is applied on the stationary cord (310) in the active spinning zone (3100) in electrostatic field during spinning, while the liquid matrix (38) devalued by spinning and/or by effect of the surrounding atmosphere is wiped off from the stationary cord (310) in case of need.

3. Method according to the claim 2, **characterised in that** the liquid matrix (38) is on the stationary cord (310) in the active spinning zone (3100) in electrostatic field applied in optional intervals and in other optional intervals the devalued liquid matrix (38) is wiped off the cord (310).

4. Method according to the claims 2 or 3, **characterised in that** the wiping off the got stuck devalued liquid matrix (38) from the cord (310) in the active spinning zone (3100) is at the spinning electrodes (3) comprising more active spinning zones (3100) of the cords (310) arranged side by side in one plane performed simultaneously on more active spinning zones (3100) of the cords (310), while between one after another following active spinning zones (3100) of the cords (310) being wiped off, always there is to be found at least one active spinning zone (3100) of the cord (310) with on it applied liquid matrix (38), from which is running the spinning.

5. Method according to the claim 1, **characterised in that** by discontinuous motion of the cord (310) is the liquid matrix (38) being applied on the cord (310) in the active spinning zone (31).

6. Device for production of nanofibres through electrostatic spinning of the liquid matrix (38) in electrostatic field between at least one spinning electrode (3) and against it arranged collecting electrode (4) and the spinning electrode (3) contains at least one spinning member (31) containing the cord (310), which comprises the straight section which is parallel with the plane of depositing the nanofibres (5) and/or with the collecting electrode (4) and it forms the active spinning zone (3100) of the cord (310), **characterised in that** the cord (310) of the spinning member (31) is stationary or is displaceable in a direction of its length or is movable in a direction of its length either discontinuously or continuously and comprises at least one active spinning zone (3100), which has a stable position towards the collecting electrode (4), and to the cord (310) there is assigned the device (37) for application of the liquid matrix (38) on the cord (310) in a direction of length of the cord (310).

7. Device according to the claim 6, **characterised in that** the cord (310) is a stationary one and in the active spinning zone (3100) there is to the cord (310) assigned the device (37) for application of the liquid matrix (38) on the cord (310) and the device (370) for wiping off the liquid matrix (38) from the cord (310) in active spinning zone (3100).

8. Device according to the claim 6, **characterised in that** the device (37) for application of the liquid matrix (38) on the cord (310) and the device (370) for wiping off the liquid matrix (38) from the cord (310) are mounted in the carrying body (32) of the spinning electrode (3) reversibly displaceably along the active spinning zone (3100) of the cord (310).

9. Device according to the claim 6, **characterised in that** the cord (310) is mounted with possibility of motion in direction of its length.

10. Device according to the claim 9, **characterised in that** the cord (310) of the spinning member (31) has a definite length several times greater than the active spinning zone (3100) of the cord and its beginning is mounted on the unwinding reel (311), and its end is mounted on the winding reel (312), while the winding reel (312) is coupled with the winding drive (36).

11. Device according to the claim 9, **characterised in that** the cord (310) of the spinning member (31) is formed of endless loop belted at least around the driving pulley (313) and around the stretching pulley (314).

12. Device according to any of the claims 9 to 11, **characterised in that** the cord (310) of the spinning member (31) has two active spinning zones (3100), which are arranged in a plane parallel with the plane for depositing of nanofibres and/or with the collecting electrode (4), while the direction of motion of the cord (310) in active spinning zones (3100) is opposite.

13. Device according to any of the claims 9 to 12, **characterised in that** the device (37) for application of the liquid matrix (38) on the cord (310) in the active spinning zone (3100) is mounted reversibly displaceably in the carrying body (32) of the spinning electrode (3) along the active spinning zone (3100) of the cord (310).

14. Device according to any of the claims 6 to 13, **characterised in that** it contains at least two side by side arranged spinning members (31) comprising the cords (310), whose active spinning zones (3100) are arranged in one plane, which is parallel with the collecting electrode (4) or with the plane of collecting electrodes.

15. Device according to any of the claims 6 to 14, **characterised in that** the cord (310) is made of electrically conductive material.

16. Device according to any of the claims 6 to 14, **characterised in that** the cord (310) is made of electrically non conductive material, while electric current is brought into the liquid matrix, with which the cord (310) or at least its active spinning zone (3100) is in a permanent contact.

17. Spinning electrode of the device for production of nanofibres through electrostatic spinning of the liquid matrix containing at least one in the carrying body of the spinning electrode mounted spinning member comprising the cord which contains the straight section parallel with the plane of depositing the nanofibres and/or with collecting electrode and it forms an active spinning zone of the cord, **characterised in that** the cord (310) is stationary or displaceable in a direction of its length or is movable in a direction of its length either discontinuously or continuously, while the active spinning zone (3100) of the cord (310) has a stable position in the carrying body (32) of the spinning electrode (3) and to the cord (310) there is assigned the device (37) for application of the liquid matrix (38) on the cord (310) in direction of length of the cord (310), which is arranged in the carrying body (32) of the spinning electrode (3).

18. Spinning electrode according to the claim 17, **characterised in that** the cord (310) is a stationary one and in its active spinning zone (3100) there is to it assigned the device (37) for application of the liquid matrix (38) on the cord (310) in the active spinning zone (3100) of the cord (310) and the device (370) for wiping off the devalued liquid matrix (38) from the cord (310) in the active spinning zone (3100).

19. Spinning electrode according to the claim 18, **characterised in that** the device (37) for application of the liquid matrix (38) on the cord (310) in the active spinning zone (3100) and the device (370) for wiping off the liquid matrix (38) from the cord (310) are in the carrying body (32) of the spinning electrode (3) mounted reversibly displaceably in direction of length of the active spinning zone (3100) of the cord (310).

20. Spinning electrode according to the claim 17, **characterised in that** the cord (310) in the carrying body (32) of the spinning electrode (32) is mounted with possibility of its motion in direction of its length.

21. Spinning electrode according to the claim 20, **characterised in that** the cord (310) of the spinning member (31) is formed of endless loop belted with at least around the driving pulley (313) and around the stretching pulley (314), that are rotatably mounted in the carrying body (32).

22. Spinning electrode according to the claim 20 or 21, **characterised in that** the cord (310) of the spinning member (31) has two active spinning zones (3100), that are arranged in a plane parallel with the plane for depositing the nanofibres and/or with the collecting electrode (4), while the direction of the cord (310) in active spinning zones (3100) is opposite.

23. Spinning electrode according to any of the claims 20 to 22, **characterised in that** the device (37) for application the liquid matrix (38) on the cord (310) in the active spinning zone is mounted reversibly displaceably in the carrying body (32) of the spinning electrode (3) along the active spinning zone (3100) of the cord (310).

24. Spinning electrode according to any of the claims 20 to 23, **characterised in that** it comprises at least two side by side arranged spinning members (31) comprising the cords (310), whose active spinning zones (3100) are arranged in one plane.

25. Spinning electrode according to any of the claims 17 to 24, **characterised in that** the cord (310) is made of electrically conductive material.

26. Spinning electrode according to any of the claims 17 to 24, **characterised in that** the cord (310) is made of electrically non-conductive material, while electric current is brought to polymer solution, with which the cord (310) or at least its active spinning zone (3100) is in a permanent contact.

## Patentansprüche

1. Verfahren zur Verspinnung der flüssigen Matrize (38) in einem elektrostatischen Feld zwischen mindestens einer Spinnelektrode (3) und einer gegen sie angeordneten Sammelelektrode (4), bei der die flüssige Matrize (38) von der Saitenoberfläche (310) versponnen wird, die sich gegen die Sammelelektrode (4) befindet und die aktive Verspinnungszone (3100) bildet, **dadurch gekennzeichnet, dass** die Saite (310) in der Richtung ihrer Länge steht oder verstellbar ist oder sich in der Richtung ihrer Länge unterbrochen oder kontinuerlich bewegt, wobei die flüssige Matrize (38) auf die Saite (310) in der Richtung der Länge der Saite (310) aufgetragen wird, wobei sie in der aktiven Verspinnungszone (3100) durch bewegliche Auftragseinrichtung aufgetragen wird oder bei der Bewegung der Saite in der Richtung ihrer Länge durch eine ortsfeste Auftragseinrichtung aufgetragen wird, die in der Richtung der Bewegung der Saite vor der aktiven Verspinnungszone (3100) angeordnet ist, wobei die aktive Verspinnungszone (3100) im Laufe der Verspinnung eine gleichbleibende Lage gegenüber der Sammelelektrode (4) einnimmt.

2. Verfahren nach dem Anspruch 1, **dadurch gekennzeichnet, dass** die flüssige Matrize (38) auf die stehende Saite (310) in der aktiven Verspinnungszone (3100) in dem elektrostatischen Feld während der Verspinnung aufgetragen wird, wobei die flüssige Matrize (38), die durch Verspinnung und/oder Wirkung der Umgebungsatmosphäre entwertet ist, von der stehenden Saite (310) im Bedarfsfalle abgestrichen wird.

3. Verfahren nach dem Anspruch 2, **dadurch gekennzeichnet, dass** die flüssige Matrize (38) auf die stehende Saite (310) in der aktiven Verspinnungszone (3100) in dem elektrostatischen Feld in den wählbaren Intervallen aufgetragen wird und die entwertete flüssige Matrize (38) in anderen wählbaren Intervallen von der Saite (310) abgestrichen wird.

4. Verfahren nach dem Anspruch 2 oder 3, **dadurch gekennzeichnet, dass** die Abstreichung der haftenbleibenden entwerteten flüssigen Matrize (38) von der Saite in der aktiven Verspinnungszone (3100) bei den Spinnelektroden (3), die mehrere aktive Verspinnungszonen (3100) der Saiten (310) aufweisen, die in einer Ebene nebeneinander angeordnet sind, zugleich auf mehreren aktiven Verspinnungszonen (3100) der Saiten vorgenommen wird, wobei sich zwischen den hintereinander nachfolgenden abzustreichenden aktiven Verspinnungszonen (3100) der Saiten immer mindestens eine aktive Verspinnungszone (3100) der Saite mit der aufgetragenen flüssigen Matrize befindet (38), von der die Verspinnung verläuft.

5. Verfahren nach dem Anspruch 1, **dadurch gekennzeichnet, dass** die flüssige Matrize (38) bei der unterbrochenen Bewegung der Saite (310) auf die Saite in der aktiven Verspinnungszone (31) aufgetragen wird.

6. Vorrichtung zur Erzeugung der Nanofasern durch elektrostatische Verspinnung der flüssigen Matrize (38) in dem elektrischen Feld zwischen mindestens einer Spinnelektrode (3) und einer gegen sie angeordneten Sammelelektrode (4), und die Spinnelektrode (3) weist mindestens ein Verspinnungsglied (31) auf, das die Saite (310) aufweist, die den direkten Teil aufweist, der mit der Ebene der Lagerung der Nanofasern (5) und/oder mit der Sammelelektrode (4) parallellaufend ist und eine aktive Verspinnungszone (3100) der Saite bildet, **dadurch gekennzeichnet, dass** die Saite (310) des Verspinnungsgliedes (31) ortsfest oder in der Richtung ihrer Länge verstellbar oder in der Richtung ihrer Länge unterbrochen oder kontinuerlich beweglich ist und mindestens eine aktive Verspinnungszone aufweist, die in Bezug auf die Sammelelektrode (4) eine stabile Lage aufweist, und der Saite (310) die Einrichtung (37) zum Auftragen der flüssigen Matrize (38) auf die Saite in der Richtung der Länge der jeweiligen Saite (310) zugeordnet ist.

7. Vorrichtung nach dem Anspruch 6, **dadurch gekennzeichnet, dass** die Saite (310) ortsfest ist und ihr in der aktiven Verspinnungszone (3100) die Einrichtung (37) zum Auftragen der flüssigen Matrize (38) auf die Saite in der aktiven Verspinnungszone (3100) und die Einrichtung (370) zum Abstreichen der flüssigen Matrize (38) von der Saite in der aktiven Verspinnungszone (3100) zugeordnet sind.

8. Vorrichtung nach dem Anspruch 6, **dadurch gekennzeichnet, dass** die Einrichtung (37) zum Auftragen der flüssigen Matrize (38) auf die Saite (310) und die Einrichtung (370) zum Abstreichen der flüssigen Matrize (38) von der Saite (310) in einem Tragkörper (32) der Spinnelektrode (3) entlang der aktiven Verspinnungszone (3100) der Saite (310) umkehrbar verstellbar gelagert sind.

9. Vorrichtung nach dem Anspruch 6, **dadurch gekennzeichnet, dass** die Saite (310) mit der Möglichkeit der Bewegung in der Richtung ihrer Länge gelagert ist.

10. Vorrichtung nach dem Anspruch 9, **dadurch gekennzeichnet, dass** die Saite (310) des Verspinnungsgliedes (31) die Endlänge mehrfach größer als die aktive Verspinnungszone (3100) der Saite aufweist und ihr Anfang auf einer Abwickelspule (311) und ihr Ende auf einer Aufwickelspule (312) gelagert sind, wobei die Aufwickelspule (312) mit dem Aufwickelantrieb (36) verkoppelt ist.

11. Vorrichtung nach dem Anspruch 9, **dadurch gekennzeichnet, dass** die Saite (310) des Verspinnungsgliedes (31) durch eine endlose Schleife gebildet wird, die mindestens um die Antriebsrolle (313) und die Spannrolle (314) herum umgegürtet ist.

12. Vorrichtung nach einem der Ansprüche 9 bis 11, **dadurch gekennzeichnet, dass** die Saite (310) des Verspinnungsgliedes (31) zwei aktive Verspinnungszonen (3100) aufweist, die in der mit der Ebene der Lagerung der Nanofasern und/oder mit der Sammelelektrode (4) parallellaufenden Ebene gelagert sind, wobei die Richtung der Bewegung der Saite (310) in den aktiven Verspinnungszonen (3100) umgekehrt ist.

13. Vorrichtung nach einem der Ansprüche 9 bis 12, **dadurch gekennzeichnet, dass** die Einrichtung (37) zum Auftragen der flüssigen Matrize (38) auf die Saite (310) in der aktiven Verspinnungszone (3100) in einem Tragkörper (32) der Spinnelektrode (3) entlang der aktiven Verspinnungszone (3100) der Saite (310) umkehrbar verstellbar gelagert ist.

14. Vorrichtung nach einem der Ansprüche 6 bis 13, **dadurch gekennzeichnet, dass** sie mindestens zwei nebeneinander angeordnete die Saiten (310) aufweisende Verspinnungsglieder (31) aufweist, deren aktive Verspinnungszonen (3100) in einer Ebene angeordnet sind, die mit der Sammelelektrode (4) oder mit der Ebene der Sammelelektroden parallellaufend ist.

15. Vorrichtung nach einem der Ansprüche 6 bis 14, **dadurch gekennzeichnet, dass** die Saite (310) aus einem elektrisch leitfähigen Material gefertigt ist.

16. Vorrichtung nach einem der Ansprüche 6 bis 14, **dadurch gekennzeichnet, dass** die Saite (310) aus einem elektrisch nichtleitenden Material gefertigt ist, wobei der elektrische Strom in die flüssige Matrize zugeführt wird, mit der die Saite (310) oder mindestens ihre aktive Verspinnungszone (3100) in einem ständigen Kontakt steht.

17. Spinnelektrode der Vorrichtung zur Erzeugung der Nanofasern durch elektrostatisches Verspinnen der flüssigen Matrize, die mindestens ein in dem Tragkörper der Spinnelektrode gelagertes eine Saite aufweisendes Verspinnungsglied aufweist, die den direkten Teil aufweist, der mit der Ebene der Lagerung der Nanofasern und/oder mit der Sammelelektrode parallellaufend ist und die aktive Verspinnungszone der Saite bildet, **dadurch gekennzeichnet, dass** die Saite (310) ortsfest oder in der Richtung ihrer Länge verstellbar oder in der Richtung ihrer Länge unterbrochen oder kontinuerlich beweglich ist, wobei die aktive Zone der Saite in dem Tragkörper (32) der Spinnelektrode (3) eine ortsfeste Lage aufweist und der Saite (310) die Einrichtung (37) zum Auftragen der flüssigen Matrize (38) auf die Saite (310) in der Richtung der Länge der Saite (310) zugeordnet ist, die in dem Tragkörper (32) der Spinnelektrode (3) gelagert ist.

18. Spinnelektrode nach dem Anspruch 17, **dadurch gekennzeichnet, dass** die Saite (310) ortsfest ist und ihr in der aktiven Verspinnungszone (3100) die Einrichtung (37) zum Auftragen der flüssigen Matrize (38) auf die Saite (310) in der aktiven Verspinnungszone (3100) und die Einrichtung (370) zum Abstreichen der entwerteten flüssigen Matrize (38) von der Saite (310) in der aktiven Verspinnungszone (3100) zugeordnet sind.

19. Spinnelektrode nach dem Anspruch 18, **dadurch gekennzeichnet, dass** die Einrichtung (37) zum Auftragen der flüssigen Matrize (38) auf die Saite (310) in der aktiven Verspinnungszone (3100) und die Einrichtung (370) zum Abstreichen der flüssigen Matrize (38) von der Saite (310) in dem Tragkörper (32) der Spinnelektrode (3) in der Richtung der Länge der aktiven Verspinnungszone (3100) der Saite (310) umkehrbar verstellbar gelagert sind.

20. Spinnelektrode nach dem Anspruch 17, **dadurch gekennzeichnet, dass** die Saite (310) in dem Tragkörper (32) der Spinnelektrode (32) mit der Möglichkeit der Bewegung in der Richtung ihrer Länge gelagert ist.

21. Spinnelektrode nach dem Anspruch 20, **dadurch gekennzeichnet, dass** die Saite (310) des Verspinnungsgliedes (31) durch eine endlose Schleife gebildet ist, die mindestens um die Antriebsrolle (313) und die Spannrolle (314) herum umgegürtet ist, die in dem Tragkörper (32) drehbar gelagert sind.

22. Spinnelektrode nach dem Anspruch 20 oder 21, **dadurch gekennzeichnet, dass** die Saite (310) des Verspinnungsgliedes (31) zwei aktive Verspinnungszonen (3100) aufweist, die in einer Ebene angeordnet sind, die mit der Ebene der Lagerung der Nanofasern und/oder mit der Sammelelektrode (4) parallellaufend ist, wobei die Richtung der Bewegung der Saite (310) in den aktiven Verspinnungszonen (3100) umgekehrt ist.

23. Spinnelektrode nach einem der Ansprüche 20 bis 22, **dadurch gekennzeichnet, dass** die Einrichtung (37) zum Auftragen der flüssigen Matrize (38) auf die Saite in der aktiven Verspinnungszone (3100) in dem Tragkörper (32) der Spinnelektrode (3) entlang der aktiven Verspinnungszone (3100) der Saite umkehrbar verstellbar gelagert ist.

24. Spinnelektrode nach einem der Ansprüche 20 bis 23, **dadurch gekennzeichnet, dass** sie mindestens zwei nebeneinander angeordnete Verspinnungsglieder (31) aufweist, die die Saiten (310) aufweisen, deren aktive Verspinnungszonen (3100) in einer Ebene angeordnet sind.

25. Spinnelektrode nach einem der Ansprüche 17 bis 24, **dadurch gekennzeichnet, dass** die Saite (310) aus einem elektrisch leitfähigen Material gefertigt ist.

26. Spinnelektrode nach einem der Ansprüche 17 bis 24, **dadurch gekennzeichnet, dass** die Saite (310) aus einem elektrisch nichtleitenden Material gefertigt ist, wobei der elektrische Strom in eine polymere Lösung zugeführt wird, mit der die Saite (310) oder mindestens ihre aktive Verspinnungszone (3100) in einem ständigen Kontakt steht.

## Revendications

1. Procédé de filage de la matrice liquide (38) dans le champ électrostatique entre au moins une électrode de filage (3) et l'électrode collectrice (4) formée contre elle, pendant lequel la matrice liquide (38) est filée de la surface de la corde (310), qui se trouve contre l'électrode collectrice (4) et, qui constitue la zone active de filage (3100), **caractérisé en ce que** la corde (310) est stationnaire, ou elle est réglable dans la direction de sa longueur, ou se déplace dans la direction de sa longueur de façon interrompue ou continue, en temps que la matrice liquide (38) s'applique sur la corde (310) dans la direction de la longueur de la corde (310), en temps qu'elle s'applique dans la zone active de filage (3100) par le dispositif mobile d'application, ou s' applique pendant le mouvement de la corde dans la direction de sa longueur par le dispositif stationnaire d'application, rangé dans la direction du mouvement de la corde avant la zone active de filage (3100), en temps que la zone active de filage (3100) a pendant le procès de filage la position constante par rapport à l'électrode collectrice (4).

2. Procédé suivant la revendication 1, **caractérisé en ce que** la matrice liquide (38) s' applique sur la corde stationnaire (310) dans la zone active de filage (3100) dans le champ électrostatique pendant le filage, en temps que la matrice liquide (38) dévalorisée par le filage, et/ou par l'effet de l'atmosphère environnante est raclée de la corde stationnaire (310) au cas de besoin.

3. Procédé suivant la revendication 2, **caractérisé en ce que** la matrice liquide (38) s'applique sur la corde stationnaire (310) dans la zone active de filage (3100) au champ électrostatique dans les intervals choisis et, dans d'autres intervals choisis on racle la matrice liquide (38) dévalorisée.

4. Procédé suivant la revendication 2 ou 3, **caractérisé en ce que** le raclage de la matrice liquide (38) dévalorisée adhérée de la corde dans la zone active de filage (3100) chez les électrodes de filage (3) comprenant plus de zones actives de filage (3100) des cordes (310), rangées une à côté de l'autre dans un plan, est réalisé en même temps sur plusieures zones actives de filage (3100) des cordes, en temps qu' entre les zones actives de filage raclées (3100) des cordes suivant une après l'autre se trouve chaque fois au moins une zone active de filage (3100) de la corde avec la matrice liquide (38) appliquée, de laquelle s'effectue le filage.

5. Procédé suivant la revendication 1, **caractérisé en ce que** pendant le mouvement interrompu de la corde (310) la matrice liquide (38) s'applique sur la corde dans la zone active de filage (31).

6. Dispositif pour la production des nanofibres par le filage électrostatique de la matrice liquide (38) dans le champ électrostatique entre au moins une électrode de filage (3) et, l'électrode collectrice (4) rangée contre elle, et l'électrode de filage (3) comprend au moins un élément de filage (31) comprenant la corde (310), qui comprend la partie directe qui est parallèle avec le plan de la déposition des nanofibres (5) et/ou avec l'électrode collectrice (4), et constitue la zone active de filage (3100) de la corde, **caractérisé en ce que** la corde (310) de l'élément de filage (31) est stationnaire, ou elle est réglable dans la direction de sa longueur, ou dans la direction de sa longueur est mobile de façon interrompue ou continue, et comprend au moins une zone active de filage, qui par rapport à l'électrode collectrice (4) a une position stable et, à la corde (310) est associé le dispositif (37) pour l'application de la matrice liquide (38) sur la corde dans la direction de la longueur de la corde (310).

7. Dispositif suivant la revendication 6, **caractérisé en ce que** la corde (310) est stationnaire et, dans la zone active de filage (3100) lui est associé le dispositif (37) pour l'application de la matrice liquide (38) sur la corde dans la zone active de filage (3100), et le dispositif (370) pour le raclage de la matrice liquide (38) de la corde dans la zone active de filage (3100).

8. Dispositif suivant la revendication 6, **caractérisé en ce que** les dipositifs (37) pour l'application de la matrice liquide (38) sur la corde (310) et le dispositif (370) pour le raclage de la matrice liquide (38) de la corde (310) sont placés dans le corps porteur (32) de l'électrode de filage (3) de façon réversiblement réglable suivant la zone active de filage (3100) de la corde (310).

9. Dispositif suivant la revendication 6, **caractérisé en ce que** la corde (310) est placée avec la possibilité du mouvement dans la direction de sa longueur.

10. Dispositif suivant la revendication 9, **caractérisé en ce que** la corde (310) de l'élément de filage (31) a une longueur définitive plus grande de plusieurs multiples que la zone active de filage (3100) de la corde et, son commencement est placé sur la bobine de déroulement (311) et sa fin est placée sur la bobine d'enroulement (312), en temps que la bobine d'enroulement (312) est accouplée avec la commande d'enroulement (36).

11. Dispositif suivant la revendication 9, **caractérisé en ce que** la corde (310) de l'élément de filage (31) est formée par une boucle sans fin embrassée au moins autour de la poulie motrice (313) et autour de la poulie de tension (314).

12. Dispositif suivant quelconque des revendications de 9 à 11, **caractérisé en ce que** la corde (310) de l'élément de filage (31) a deux zones actives de filage (3100), qui sont rangées dans le plan parallèle de placement des nanofibres et/ou avec l'électrode collectrice (4), en temps que la direction du mouvement de la corde (310) dans les zones actives de filage (3100) est inverse.

13. Dispositif suivant quelconque des revendications de 9 à 12, **caractérisé en ce que** le dipositif (37) pour l'application de la matrice liquide (38) sur la corde (310) dans la zone active de filage (3100) est placé dans le corps porteur (32) de l'électrode de filage (3) de façon réversiblement réglable suivant la zone active de filage (3100) de la corde (310).

14. Dispositif suivant quelconque des revendications de 6 à 13, **caractérisé en ce qu'** il comprend au moins deux éléments de filage (31) rangés un à côté de l'autre comprenant des cordes (310), les zones actives de filage (3100) desquels sont placés dans un plan qui est parallèle avec l'électrode collectrice (4) ou avec le plan des électrodes collectrices.

15. Dispositif suivant quelconque des revendications de 6 à 14, **caractérisé en ce que** la corde (310) est en matériau électriquement conductif.

16. Dispositif suivant quelconque des revendications de 6 à 14, **caractérisé en ce que** la corde (310) est en matériau diélectrique, en temps que le courant électrique est amené dans la matrice liquide, avec laquelle la corde (310) ou au moins sa zone active de filage (3100) est en contact permanent.

17. Électrode de filage du dispositif pour la production des nanofibres par l'effet de filage électrostatique de la matrice liquide, comprenant au moins un élément de filage placé dans le corps porteur de l'électrode de filage, comprenant la corde qui comprend la partie directe parallèle avec le plan de placement des nanofibres et/ou avec l'électrode collectrice et, constitue la zone active de filage de la corde, **caractérisé en ce que** la corde (310) est stationnaire ou, elle est réglable dans la direction de sa longueur, ou elle est dans la direction de sa longueur mobile de façon interrompue ou continue, en temps que la zone active de la corde a dans le corps porteur (32) de l'électrode de filage (3) une position stable et à la corde (310) est associé le dispositif (37) pour l'application de la matrice liquide (38) sur la corde (310) dans la direction de la longueur de la corde (310), qui est rangé dans le corps porteur (32) de l'électrode de filage (3).

18. Électrode de filage suivant la revendication 17, **caractérisé en ce que** la corde (310) est stationnaire et dans la zone active de filage (3100) on lui associe le dispositif (37) pour l'application de la matrice liquide (38) sur la corde (310) dans la zone active de filage (3100) et, le dispositif (370) pour le raclage de la matrice liquide (38) de la corde (310) dans la zone active de filage (3100).

19. Électrode de filage suivant la revendication 18, **caractérisé en ce que** le dispositif (37) pour l'application de la matrice liquide (38) sur la corde (310) dans la zone active de filage (3100) et, le dispositif (370) pour le raclage de la matrice liquide (38) de la corde (310) sont placés dans le corps porteur (32) de l'électrode de filage (3) de façon réversiblement réglable dans la direction de la longueur de la zone active de filage (3100) de la corde (310).

20. Électrode de filage suivant la revendication 17, **caractérisé en ce que** la corde (310) est dans le corps porteur (32) de l'électrode de filage (3) placée avec la possibilité du mouvement dans la direction de sa longueur.

21. Électrode de filage suivant la revendication 20, **caractérisé en ce que** la corde (310) de l'élément de filage (31) est formée par la boucle sans fin embrassée au moins autour de la poulie motrice (313) et autour de la poulie de tension (314), qui sont placées de façon rotative dans le corps porteur (32).

22. Électrode de filage suivant la revendication 20 ou 21, **caractérisé en ce que** la corde (310) de l'élément de filage (31) a deux zones actives de filage (3100), qui sont placées dans le plan parallèle avec le plan du placement des nanofibres et/ou avec l'électrode collectrice (4), en temps que la direction du mouvement de la corde (310) dans les zones actives de filage (3100) est inverse.

23. Électrode de filage suivant quelconque des revendications de 20 à 22, **caractérisé en ce que** le dispositif (37) pour l'application de la matrice liquide (38) sur la corde dans la zone active de filage (3100) est placé de façon réversiblement réglable dans le corps porteur (32) de l'électrode de filage (3) au long de la zone active de filage (3100) de la corde.

24. Électrode de filage suivant quelconque des revendications de 20 à 23, **caractérisé en ce qu'**elle comprend au moins deux éléments de filage (31) placés un à côté de l'autre, comprenant les cordes (310), les zones actives de filage (3100) desquels sont rangés dans un plan.

25. Électrode de filage suivant quelconque des revendications de 17 à 24, **caractérisé en ce que** la corde (310) est en matériau électriquement conductif.

26. Électrode de filage suivant quelconque des revendications de 17 à 24, **caractérisé en ce que** la corde (310) est en matériau diélectrique, en temps que le courant électrique est amené dans la solution des polymères, avec laquelle la corde (310), ou au moins sa zone active de filage (3100) est dans le contact permanent.
